Europäisches Patentamt

(19) European Patent Office　(11) Publication number: **0 205 162**
**B1**
Office européen des brevets

(12) **EUROPEAN PATENT SPECIFICATION**

(45) Date of publication of the patent specification:
22.03.89

(21) Application number: **86107939.0**

(22) Date of filing: **11.06.86**

(51) Int. Cl.⁴: **G 21 C 3/32, F 15 D 1/00**

(54) **Reactor fuel assembly and nuclear reactor.**

(30) Priority: **12.06.85 JP 126109/85**

(43) Date of publication of application:
**17.12.86 Bulletin 86/51**

(45) Publication of the grant of the patent:
**22.03.89 Bulletin 89/12**

(84) Designated Contracting States:
**DE FR IT SE**

(56) References cited:
**EP-A- 0 027 984**
**DE-A- 3 150 477**
**DE-A- 3 320 753**
**US-A- 4 205 632**

(73) Proprietor: **HITACHI, LTD., 6, Kanda Surugadai 4-chome
Chiyoda-ku, Tokyo (JP)**

(72) Inventor: **Ikemura, Kazuyuki, 5-14-34, Mugino,
Hakata-ku, Fukuoka-shi Fukuoka-ken (JP)**
Inventor: **Yokomizo, Osamu, 640-82, Suwama,
Tohkai-mura, Naka-gun Ibaraki-ken (JP)**
Inventor: **Yoshimoto, Yuichiro, 1-7-13, Daihara-cho,
Hitachi-shi Ibaraki-ken (JP)**
Inventor: **Hayashi, Tatsuo, 2-12-11, Hanayma-cho,
Hitachi-shi Ibaraki-ken (JP)**
Inventor: **Kashiwai, Shinichi, 2-13-52,
Nishinarusawa-cho, Hitachi-shi Ibaraki-ken (JP)**
Inventor: **Masuhara, Yasuhiro, 4-15-4-1, Suwa-cho,
Hitachi-shi Ibaraki-ken (JP)**
Inventor: **Sakurai, Mikio, 2274-38, Senba-cho, Mito-shi
Ibaraki-ken (JP)**
Inventor: **Tomiyama, Akio, 2-10-30, Higashitaga-cho,
Hitachi-shi Ibaraki-ken (JP)**
Inventor: **Fujii, Tadashi, 6-12-1, Ayukawa-cho,
Hitachi-shi Ibaraki-ken (JP)**
Inventor: **Sumida, Isao, 174-58, Suwama Tohkai-mura,
Naka-gun Ibaraki-ken (JP)**

(74) Representative: **Patentanwälte Beetz sen. - Beetz jun.
Timpe - Siegfried - Schmitt-Fumian,
Steinsdorfstrasse 10, D-8000 München 22 (DE)**

## Description

The present invention relates to a reactor fuel assembly and a nuclear reactor, and more particularly to a fuel assembly of the kind referred to in the preamble portion of patent claim 1. Such a fuel assembly is known from DE-A-3 150 477.

Since, in the boiling water reactor, the voids of the steam rise inside the core, enhancement in the nuclear thermal hydraulic stability has been studied.

JP-A-57-52897 shows in Fig. 5 a construction which enhances the nuclear thermal hydraulic stability in the boiling water reactor. The construction will be explained below. The boiling water reactor is such that a lower core support plate disposed in the reactor pressure vessel is provided with a fuel support fixture, and that a fuel assembly is supported by the fuel support fixture with its lower end inserted in the upper opening of a cooling water channel provided in the fuel support fixture. An orifice having one round opening is mounted on the inlet part of the cooling water channel in the fuel support fixture. The amount of voids of the core where the fuel assembly is arranged is measured, and according to the measured amount of voids, an orifice shield plate is controlled to regulate the open area of the orifice. When a nuclear thermal hydraulic instability has occurred, the amount of voids in the fuel assembly increases. Therefore, in a case where the amount of voids has exceeded a predetermined quantity, the orifice shield plate is lowered, whereby the open area of the orifice is increased to temporarily raise the rate of flow and to prevent the increase of the amount of voids. Thus, the nuclear thermal hydraulic instability is eliminated.

From DE-A-3 150 477 a fuel assembly for a nuclear reactor is known, having an upper tie plate, a lower tie plate, and a plurality of fuel rods each of which has both its ends retained by the upper tie plate and the lower tie plate; and a resistance device disposed in said lower tie plate, said resistance device having a plurality of coolant passages.

Even if the rate of coolant flow through the coolant passages changes, the orifice coefficient of the tie plate remains almost constant.

### Summary of the Invention:

An object of the present invention is to prevent a flow instability under the low flow rate state of a coolant without employing a movable portion.

The present invention is characterized in that said coolant passages are formed with throat portions, that the cross-sectional area of each of the coolant passages increases continuously from the throat portion toward an upper stream side and a lower stream side respectively, and that each of the opposing side walls of the coolant passage is made of a continuous surface which has no angled part from the upper stream side of the throat portion to the lower stream side thereof.

### Brief Description of the Drawings:

Fig. 1 is a characteristic diagram showing the relationship between the core flow rate and the reactor power;

Fig. 2 is a partial vertical sectional view of a fuel support fixture in a prior art;

Fig. 3 is a graph showing the relationship between the orifice coefficient and the damping ratio;

Fig. 4A is an explanatory diagram showing the state of a damping ratio during an unstable flow, while Fig. 4B is an explanatory diagram showing the state of a damping ratio during a stable flow;

Fig. 5A is a graph showing the variation of the orifice coefficient versus the core flow rate, Fig. 5B is a graph showing the variation of the damping ratio versus the core flow rate, and Fig. 5C is a graph showing the variation of the reactor power versus the core flow rate;

Fig. 6A is a front view of the test piece of an orifice for use in the present invention, while Fig. 6B is a sectional view taken along plane VI-VI in Fig. 6A;

Fig. 7 is a structural view of an experimental device for conducting the flow experiment of the orifice in Fig. 6A;

Fig. 8 is a graph showing the variation of the orifice coefficient based on the result of the flow experiment of the orifice in Fig. 6A;

Fig. 9 is an explanatory diagram showing a flow state for a region $R_e < R_{ec}$ ($R_e$: Reynolds number, $R_{ec}$: critical Reynolds number) in an orifice interspace in Fig. 6B, while Fig. 10 is an explanatory diagram showing a flow state for a region $R_e > R_{ec}$ in the orifice interspace in Fig. 6B;

Figs. 11A - 11F are sectional views showing different embodiments of resistors which are disposed in orifices;

Fig. 12 is a vertical sectional view of a fuel assembly which is an embodiment of the present invention;

Fig. 13 is a structural view, partly broken away, of a fuel rod in Fig. 12;

Fig. 14A is a front view of an orifice in Fig. 12, while Fig. 14B is a sectional view taken along plane $X_1 - X_1$ in Fig. 14A·

Fig. 15 is a partial vertical sectional view of a boiling water reactor which is an embodiment of the present invention;

Fig. 16 is a perspective view of a fuel support fixture in Fig. 15;

Fig. 17 is an expanded view of part I in Fig. 15;

Fig. 18 is a vertical sectional view of a part corresponding to the part I in Fig. 15, showing a boiling water reactor which is another embodiment of the present invention;

Fig. 19 is a perspective view of a fuel support fixture in Fig. 18;

Fig. 20A is a front view of another embodiment of an orifice, while Fig. 20B is a sectional view taken along plane $X_2 - X_2$ in Fig. 20A;

Fig. 21 is a vertical sectional view of another embodiment of a resistor; and

Figs. 22A, 23A and 24A are front views each showing another embodiment of an orifice, while Figs. 22B, 23B and 24B are sectional views respectively taken along plane $X_3 - X_3$ in Fig. 22A, plane $X_4 - X_4$ in Fig. 23A and plane $X_5 - X_5$ in Fig. 24A.

### Description of the Preferred Embodiments:

The present invention has been made on the basis of the result of study on the unstable phenomenon of a boiling water reactor in a prior art. The contents of the study will be explained below.

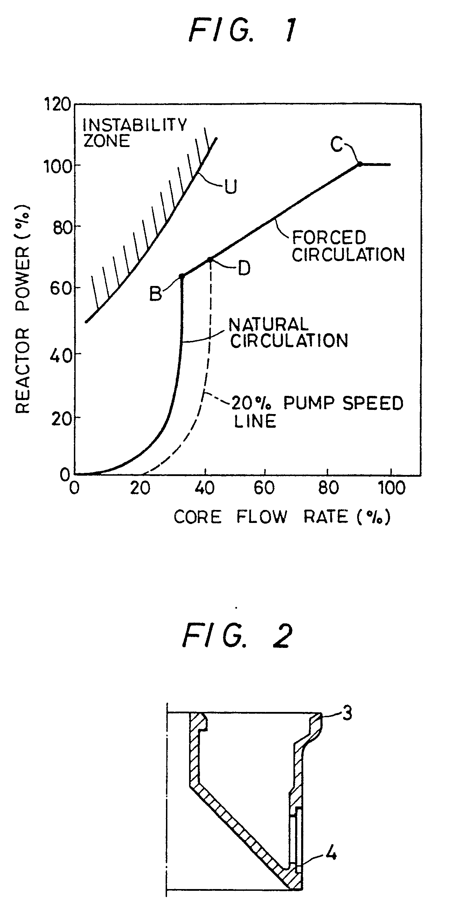

The unstable phenomenon of the boiling water reactor arises in a region above a curve U in Fig. 1. That is, the unstable phenomenon arises in a region in which the flow rate of cooling water passing through a core (hereinbelow, called «core flow rate») is low to cause a high reactor power. In Fig. 1, a curve (in a solid line) connecting a point A and a point B indicates the variation of the reactor power in the case of manipulating a control rod in the state in which the core flow rate is given by natural circulation. A straight line connecting the point A and a point C indicates the variation of the reactor power in the case of changing the core flow rate while the degree of insertion of the control rod into the core is held constant. In this case, the cooling water is forcibly supplied to the core by a recirculation pump. A characteristic depicted by a broken line in Fig. 1 indicates a reactor power variation in the case where a core flow rate equal to 20% of a rated value is established by the recirculation pump. The point C corresponding to the rated state (100% reactor power) is sufficiently distant from the unstable region, so that a stability margin is ensured therefor. Since, however, the natural circulation state of the curve AB (the state in which the cooling water is circulated by the buoyancy of voids produced in the core) is close to the unstable region, it has a small stability margin.

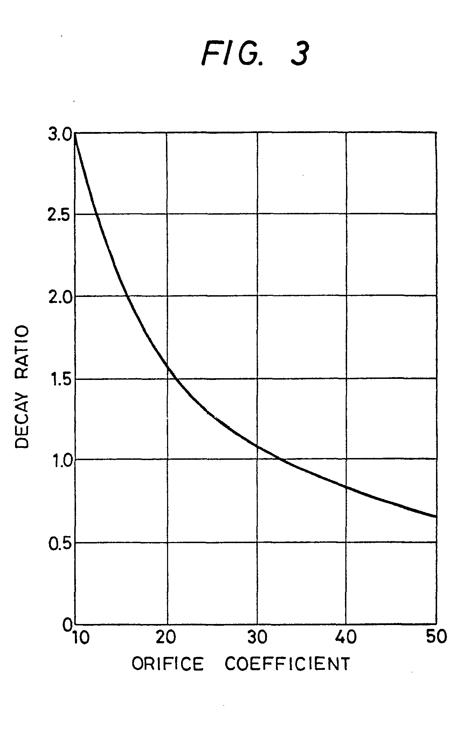

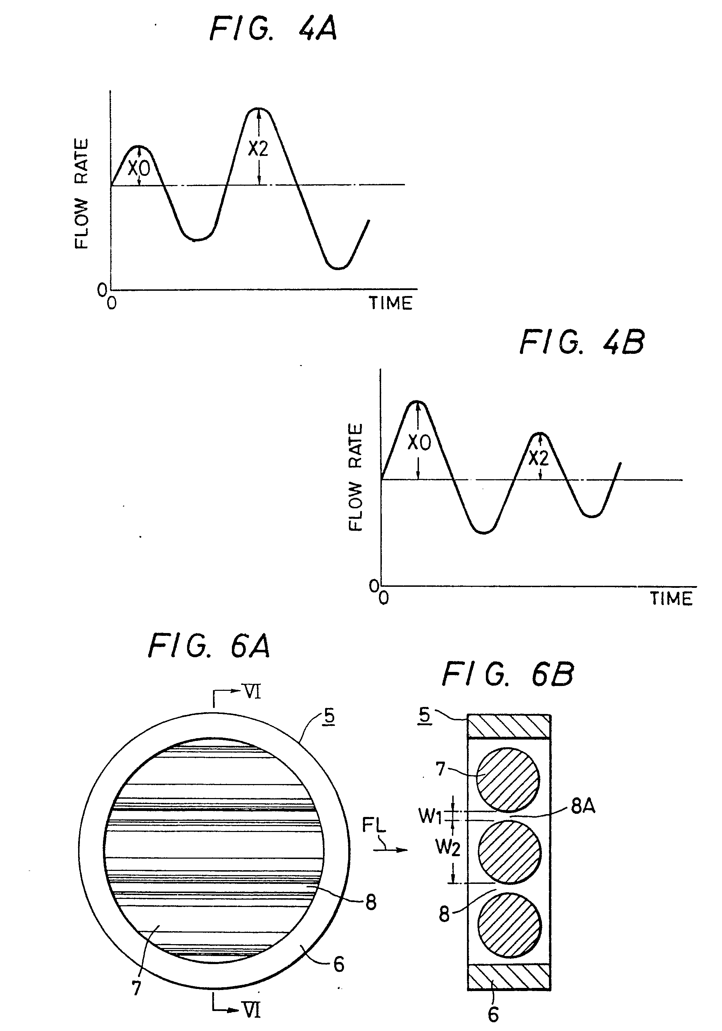

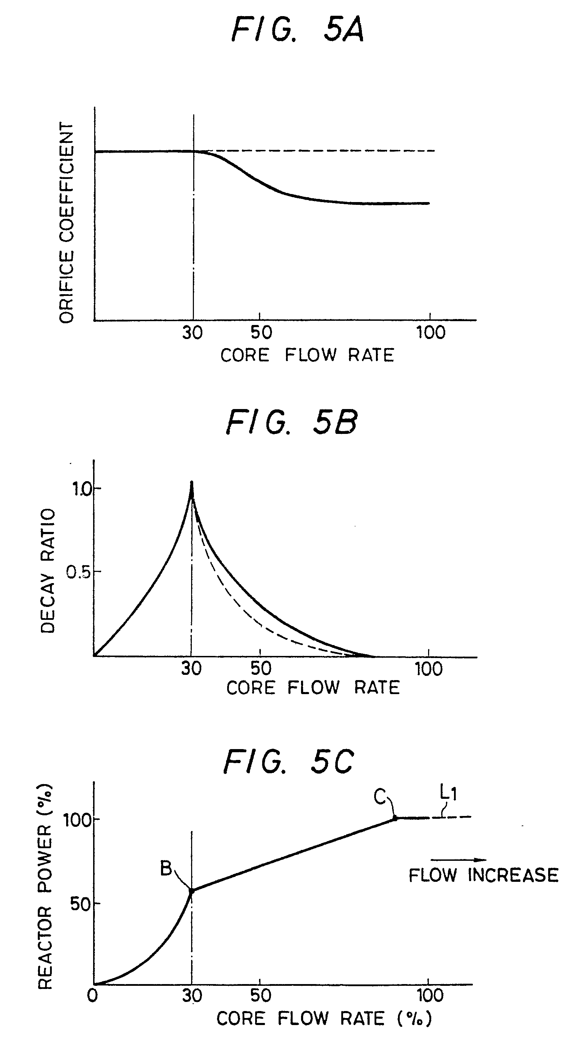

In the prior-art boiling water reactor, to the end of increasing the stability margin in the natural circulation state, the cooling water inlet of a fuel support fixture 3 supporting the lower end of a fuel assembly is provided with an orifice 4 as shown in Fig. 2. The effect of the orifice 4 in the natural circulation state is illustrated in Fig. 3. The axis of abscissas in Fig. 3 represents the orifice coefficient which indicates the flow resistance of the orifice 4, while the axis of ordinates represents the damping ratio which is the indicator of the stability. The damping ratio is the ratio between the amplitudes of adjacent sinusoidal waves (X2/X0) as shown in Fig. 4A or Fig. 4B, and expresses the fluctuation damping factor of the flow rate or the like. The state of Fig. 4A under which an inequality (X2/X0 > 1) is satisfied is an unstable flow state. On the other hand, the state of Fig. 4B under which an inequality (X2/X0 < 1) is satisfied is a stable flow state. When the effect of the orifice 4 is studied in terms of the damping ratio, the stability is enhanced with increase in the orifice coefficient (with increase in the flow resistance by the orifice 4) as shown in Fig. 3. The safety becomes problematic in the natural circulation state in which the damping ratio approximates 1.0 as indicated by a broken line in Fig. 5B, and especially near the point B in Fig. 1. As regards the orifice 4 of the fuel support fixture 3 in the prior art, even when the reactor power varies with the increase of the core flow rate as indicated by a broken line in Fig. 5C, the orifice coefficient remains constant as indicated by a broken line in Fig. 5A. With the orifice 4 having such an orifice coefficient, the damping ratio varies as indicated by the aforementioned broken line in Fig. 5B. As the orifice 4 of the fuel support fixture 3 in the prior art, there has been employed one having an orifice coefficient set on the premise of avoiding the unstable state in the natural circulation state. This orifice coefficient is always constant as indicated by the broken line in Fig. 5A.

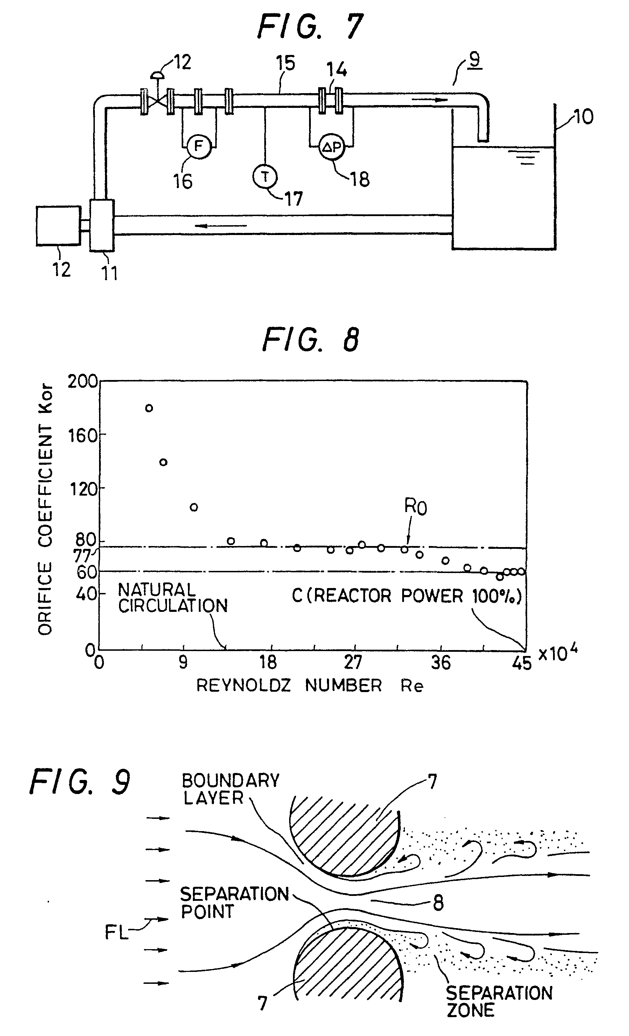

With note taken of the fact that the prevention of the unstable state for small core flow rates (during the natural circulation) and the increase of the range of the control of the reactor power by the core flow rate can be achieved by furnishing a fuel assembly or a fuel support fixture with a mechanism which does not employ any movable part and according to which a pressure loss increases durcing the natural circulation of cooling water with the small core flow rates whereas the pressure loss decreases when the core flow rate is large, the inventors made various studies and experiments in order to find out the practicable structure of the aforementioned mechanism. The studies and experiments have revealed that an orifice 5 having the shape of an opening as shown in Figs. 6A and 6B meets the conditions mentioned above.

The orifice 5 is such that three round bars 7 are arrayed in parallel within a ring 6 with gaps or interspaces 8 defined between the adjacent round bars and have both their ends attached to the ring 6, whereupon a coolant flows through the gaps 8 in the direction of arrow FL. The sectional shape of the gap 8, namely, a coolant passage in the direction of the arrow FL is such that the cross-sectional area decreases gradually in the flow direction on the upper stream side of a throat portion 8A being the narrowest and increases gradually in the flow direction on the lower stream side of the throat portion 8A, and that both sideward walls forming the gap 8 (the surfaces of the round bars 7) are continuous planes having no angled part. The shape of the gap 8 in the axial direction of the round bar 7, particularly the shape of the throat portion 8A, is an elongate shape which is determined by the axial shape of the side surfaces of the opposing pair of round bars 7. The flow characteristics of the orifice 5 were obtained by the use of an experimental device 9 shown in Fig. 7. The schematic construction of the experimental device 9 will be described. The experimental device 9 is so constructed that a tank 10 filled with water, a pump 11, a flow rate regulator valve 13 and a test piece 14 are connected by piping 15. One end of the piping 15 is open over the tank 10. The pump 11 is driven by a motor 12. The orifice 5 shown in Fig. 6A is set in the test piece 14. The flow rate and temperature of water which is fed into the test piece 14 are respectively measured by a flow meter 16 and a thermometer 17. The differential pressure between the upper stream side and lower stream side of the test piece 14 is measured by a differential pressure gauge 18.

In the flow test of the orifice 5, the pump 11 is driven to supply the water in the tank 10 to the orifice 5 in the test piece 14 through the piping 15. The flow rate of the water to be supplied is controlled by the flow rate regulator valve 13.

When the measurement data items of the flow rate, differential pressure and temperature obtained with the experiment were rearranged, characteristics in Fig. 8 were found. The axis of abscissas in Fig. 8 represents the Reynolds number $R_e$, while the axis of ordinates represents the orifice coefficient $K_{or}$. The orifice coefficient $K_{or}$ of the orifice 5 becomes about 77 near $R_e = 13 \times 10^4$ corresponding to the natural circulation state (the point B in Fig. 1) of the boiling water reactor, and becomes about 60 for $R_e = 45 \times 10^4$ corresponding to the reactor power 100% (the point C in Fig. 1) of the boiling water reactor. The orifice coefficient $K_{or}$ at the point C in Fig. 1 is about 22% lower than that at the point B in Fig. 1. Consequently, the pressure loss at the point C becomes about 22% lower than that at the point B. The orifice coefficient $K_{or}$ of the orifice 5 is substantially constant at about 77 in an $R_e$ range of $13 \times 10^4 - 30 \times 10^4$, and decreases gently when $R_e$ exceeds $30 \times 10^4$. The point of $R_e = 30 \times 10^4$ corresponds to a core flow rate of about 60% in Fig. 1.

In this manner, the orifice 5 furnished with the plurality of round bars has no movable part, and it has the function according to which the orifice coefficient is reduced by the increase of the flow rate (that is, the pressure loss is lowered by the increase of the flow rate).

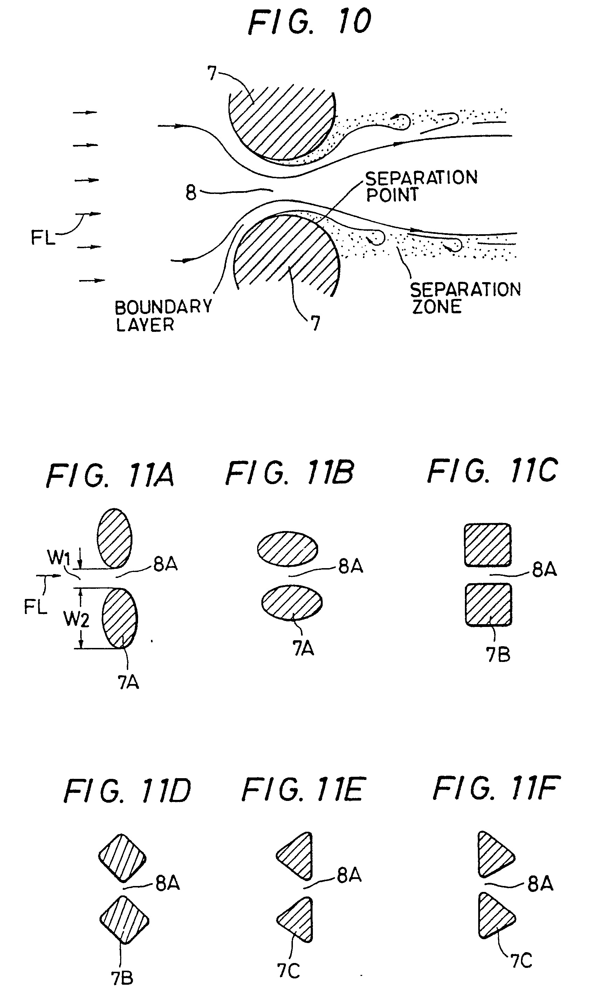

The reasons why the characteristics illustrated in Fig. 8 appear will be described with reference to Figs. 9 and 10. Fig. 9 shows the flow state of water between the adjacent round bars 7 of the orifice 5 for $R_e = 13 \times 10^4$ under the natural circulation state in Fig. 8. The water is flowing in the direction of arrows FL. In this case, a boundary layer which is formed along the surface of each round bar 7 is a laminar boundary layer. A burble point is a position at which the boundary layer separates away from the surface of the round bar 7, and it is formed on an upper stream side with respect to a perpendicular which passes through the axes of the round bars 7. A burble region is formed on the lower stream side of the burble point. A pressure in the burble region formed downstream of the round bar 7 becomes lower than a pressure in a region where the boundary layer does not separate on the upper stream side of the round bar. Accordingly, a pressure difference arises between the upper stream side and lower stream side of the gap 8 which between the adjacent round bars 7, and a pressure loss arises therebetween. Fig. 10 shows the flow state of water between the adjacent round bars 7 of the orifice 5 for $R_e = 45 \times 10^4$ at the point C in Fig. 8. In this case, a boundary layer which is formed along the surface of each round bar 7 is a turbulent boundary layer. A burble point is formed on a lower stream side with respect to the perpendicular which passes through the axes of the round bars 7. A burble region which is formed downstream of the burble point becomes smaller than in the case of Fig. 9. Accordingly, the lower pressure region (the burble region) which is formed behind the round bar 7 in the flow direction lessens as compared with that in the case of Fig. 9, and the pressure difference between the upper stream side and lower stream side of the gap 8 becomes smaller. The pressure loss between the upper stream side and lower stream side of the gap 8 in Fig. 10 decreases as compared with that in Fig. 9.

The flow within the boundary layer formed along the surface of the round bar 7 is changed from the laminar flow to the turbulent flow by increase in the velocity of flow in the gap 8, namely, increase in the Reynolds number $R_e$ in the gap 8. The change of the boundary layer formed along the surface of the round bar 7, from the laminar boundary layer to the turbulent boundary layer occurs as to Fig. 8, at the point at which the orifice coefficient $K_{or}$ begins to shift from 77, namely, at the point of $R_e \doteqdot 33 \times 10^4$. This Reynolds number of $33 \times 10^4$ is termed 'critical Raynold number.' In a region of $R_e < R_{ec}$, the boundary layer of the round bar 7 is the laminar boundary layer, and the pressure loss between the upper stream side and lower stream side of the gap 8 becomes great, whereas in a region of $R_e > R_{ec}$, the boundary layer is the turbulent boundary layer, and the pressure loss between the upper stream side and lower stream side of the gap 8 becomes small.

As a trend, the orifice coefficient of the orifice 5 decreases with the increase of the core flow rate as indicated by a solid line in Fig. 5A (the orifice coefficient is assumed to lower from the natural circulation state at the point B). As shown in Fig. 5B, such decrease in the orifice coefficient increases the damping ratio of the orifice 5 in comparison with that of the orifice 4 in the prior art. However, the proportion of the increase is small, and the damping ratio of the orifice 5 does not exceed 1.0.

Instead of the round bars 7 of the orifice 5, bars 7A - 7C having sectional shapes as shown in Figs. 11A - 11F may well be combined as illustrated and attached to rings 6. These orifices were subjected to flow experiments similar to the experiment of the orifice 5. It has consequently been revealed that, also with these orifices, boundary layers formed along the surfaces of the bars 7A - 7C become laminar boundary layers for $R_e < R_{ec}$ and turbulent boundary layers for $R_e > R_{ec}$ likewise to the case of the orifice 5. The critical Reynolds number $R_{ec}$ of the orifices corresponding to Figs. 11A - 11F differ from one another. For the combinations of these bars, water was caused to flow in the direction of arrow FL. In Fig. 11A, the bars 7A having an elliptic section are so arranged that the major axis of each ellipse extends perpendicularly to the direction of the arrow FL. In Fig. 11B, the bars 7A are so arranged that the major axis of each ellipse extends in the direction of the arrow FL. In Fig. 11C, the bars 7B having a section of regular square are so arranged that one side of each regular square extends in the direction of the arrow FL. In Fig. 11D, the bars 7B are so arranged that one side of each regular square inclines by 45° to the direction of the arrow FL. In Fig. 11E, the bars 7C having a section of regular triangle are so arranged that one corner part of each section faces an upper stream side. In Fig. 11F, the bars 7C are so arranged that one corner part of each section faces a lower stream side. In the bars 7B and 7C, each corner part of the section is not angled but is a smooth curved surface having any desired curvature.

The side walls of coolant passages defined between the bars or resistors shown in Fig. 6A and Figs. 11A - 11F (the side surfaces of the resistors) are formed of continuous smooth surfaces having no angled part in the flow direction of the fluid in order that the burble point may move from the upper stream side to the lower stream side of the throat portion 8A as illustrated in Figs. 9 and 10. If the side wall of the coolant passage is formed with a angle part in the flow direction of the fluid, a burble point will appear in the angled part. Moreover, even if the velocity of flow increases, the burble point will fail to move downstream of the angled part. For this reason, it is impossible to attain the characteristics shown in Fig. 8, namely, the phenomenon that the pressure loss lowers in the region of $R_e > R_{ec}$ .

The coolant flow rate which affords the critical Reynolds number can be regulated by changing the sectional shape and dimensions of the resistors (the bars shown in Fig. 6 and Figs. 11A - 11F), while the pressure loss can be regulated by the area of the passage which is fined by the resistors. The width $W_1$ of the throat portion 8A defined between the resistors is smaller than the width $W_2$ of the resistor in the direction perpendicular to the flow direction FL of the coolant.

According to such studies results, the inventors have reached the conculsion that the coolant passage (having a throat portion) of a resistance device (for example, the orifice 5 stated before) may be constructed so as to increase its cross-sectional area continuously from the throat portion toward an upper stream side and a lower stream side, while each of the side walls of the coolant passage may be constructed of a smooth continuous surface having no angled part so as to permit a burble point to move between the upper stream side and lower stream side of the throat portion, and that the resistance device may be disposed in a fuel assembly or a fuel support fixture. Embodiments of the present invention satisfying such conditions will be stated below.

One preferred embodiment of the present invention applied to a boiling water reactor will now be described.

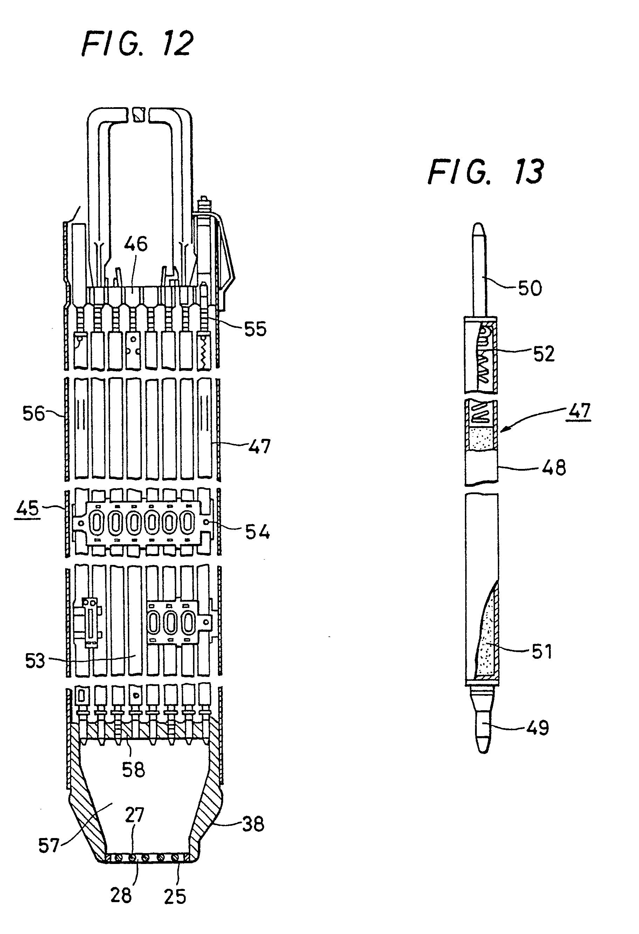

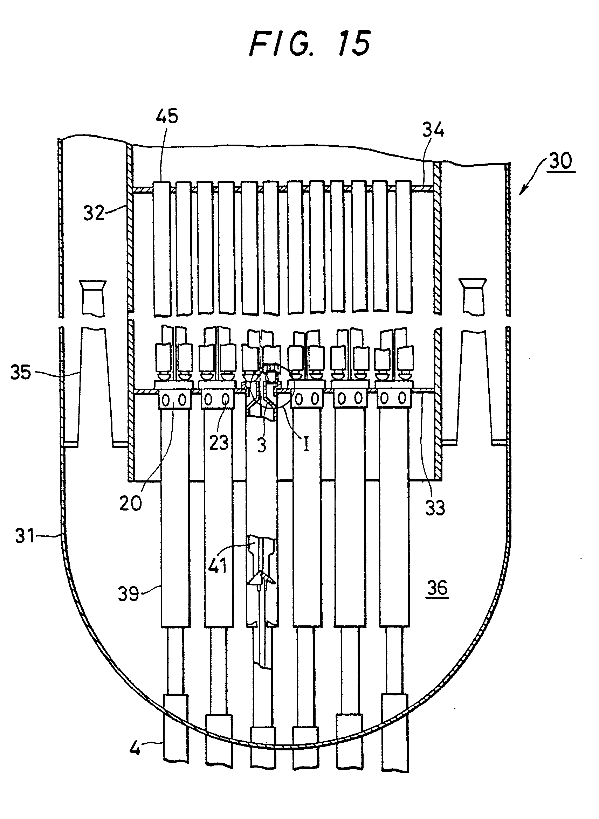

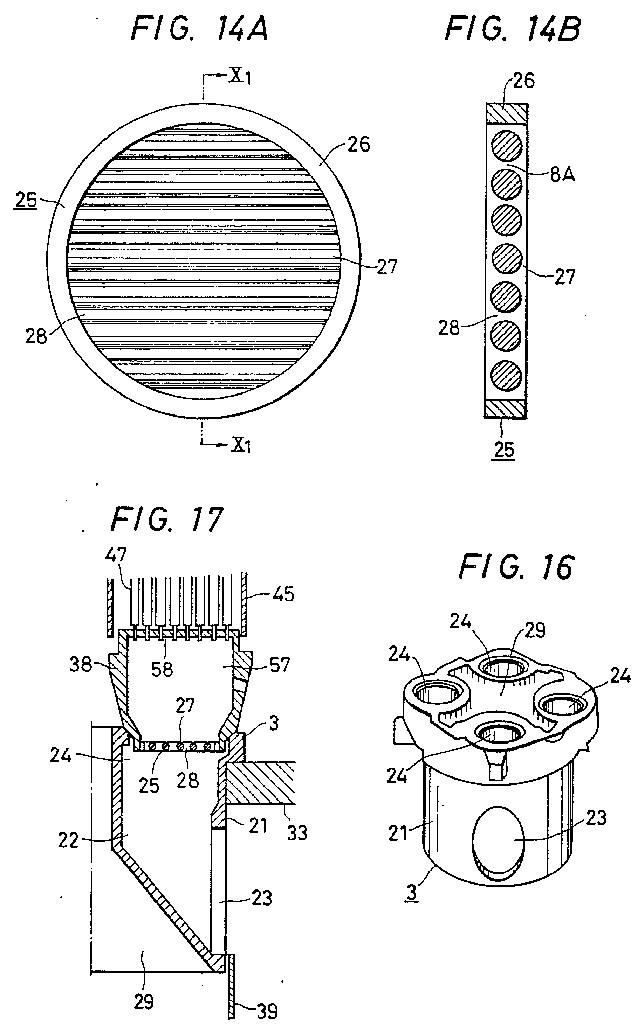

The embodiment of a fuel assembly for the boiling water reactor is shown in Fig. 12. The fuel assembly 45 of this embodiment is constructed of a channel box 56, a lower tie plate 38, an upper tie plate 46, spacers 54, fuel rods 47 and an orifice 25. The upper and lower end parts of the fuel rod 47 are respectively held by the lower tie plate 38 and the upper tie plate 46. Also each water rod 53 has both its end parts held by the lower tie plate 38 and the upper tie plate 46. Several spacers 54 are arranged in the axial direction of the fuel rods 47, and hold the gaps between the fuel rods 47 in an appropriate state. The channel box 56 is mounted on the upper tie plate 46, and surrounds the outer periphery of the bundle of the fuel rods 47 held by the spacers 54. The orifice 25 shown in Figs. 14A and 14B is mounted on the lower tie plate 38 in a manner to be arranged at the lower end of a space 57 which is defined inside the lower tie plate and which serves as the channel of cooling water. The upper end of the space 57 is the lower surface of a fuel rod support portion 58. The lower ends of the fuel rods 47 are held by the fuel rod support portion 58 of the lower tie plate 38.

Fig. 13 shows the detailed structure of the fuel rod 47. The fuel rod 47 is such that its both its ends are hermetically closed by a lower end plug 49 and an upper end plug 50, and that a cladding 48 is charged with a large number of fuel pellets 51. A spring 52 is arranged in a gas plenum within the cladding 48, and urges the fuel pellets 51.

The aforementioned orifice 25 is a resistance device. As shown in Figs. 14A and 14B, the orifice 25 is so constructed that thirteen round bars circular in cross-section (which may well be circular pipes) 27 are attached to a ring 26 in a manner to be spaced from one another and to be parallel to one another. An interspace or gap 28 to serve as a cooling water passage is formed between the adjacent round bars 27. Symbol 8A denotes a throat portion in which the gap 28 is the narrowest. The gap 28 in the present embodiment has a cross-sectional area which gradually increases from the throat portion 8A toward an upper stream side and a lower stream side, and it is defined by a pair of side walls (the side surfaces of the adjacent round bars 27) which are made of continuous surfaces having no angled part. The orifice 25 has a plurality of such gaps 28. The round bar 27 is a resistance member. The resistance member has such a sectional shape that its dimension in a direction orthogonal to the flow direction of the cooling water increases continuously toward the lower stream side in the flow direction (FL) until it reaches the maximum dimension, whereupon it decreases continuously.

Fig. 15 shows an ambodiment of a boiling water reactor in which fuel assemblies 45 is disposed.

The boiling water reactor 30 has fuel support fixtures 3, a reactor pressure vessel 31, a core lower support plate 33 and the fuel assemblies 45. A core shroud 32 is arranged in and fixed to the reactor pressure vessel 31. A jet pump 35 is interposed between the reactor pressure vessel 31 and the core shroud 32. The core lower support plate 33 is attached to the lower end part of the core shroud 32 and is arranged inside the core shroud 32. The plurality of fuel support fixtures 3 are mounted on the core lower support plate 33 while penetrating this plate 33. The fuel support fixture 3 has a structure shown in Fig. 16, which includes a cruciform through hole 29 in the central part of a fixture body 21 and four cooling water passageways 22 around the through hole 29. The inlet opening 23 of each cooling water passageway 22 lies below the core lower support plate 33, and is open to a lower plenum 36. The fuel support fixture is means to support the fuel assembly.

As shown in Fig. 17, the large number of fuel assemblies 45 arranged in the core shroud 32 are supported in such a manner that a lower tie plate 38 therefor is inserted in the outlet openings 24 of the cooling water passageways 22 of the fuel support fixtures 3. Fig. 17 is a partial enlarged view of a portion I in Fig. 15. The upper end parts of the fuel assemblies 45 are supported by an upper lattice plate 34 which is disposed in the core shroud 32. That part inside the core shroud 32 in which the fuel assemblies 45 are arranged is the core. The lower plenum 36 is formed below the core lower support plate 33 inside the reactor pressure vessel 31. A large number of control rod guide pipes 39 are disposed within the lower plenum 36. A control rod driver housing 40 is joined to the lower end of each control rod guide pipe 39, and it penetrates the reactor pressure vessel 31 to extend below this vessel. Control rods 41 move vertically within the control rod guide pipes 39, and are put into and out of the interstices among the fuel assemblies 45 of the core through the through holes 29 of the fuel support fixtures 3. The control rod 41 is moved by a control rod driver (not shown) which is disposed in the control rod driver housing 40.

The boiling water reactor 30 is started up as stated below. The boiling water reactor 30 which has been brought into its critical state by drawing the control rods 41 out of the core is subjected to a temperature- and pressure-raising operation while the control rods 41 are further extracted. At this time, the core is supplied with the cooling water. The supply of the cooling water performed in such a way that a recirculation pump (not shown) is driven to spurt the cooling water from a nozzle into the jet pump 35. The spurted cooling water absorbs into the jet pump 35, the cooling water which exists between the reactor pressure vessel 31 and the core shroud 32. The cooling water discharged from the jet pump 35 flows into the lower plenum 36 and then into the cooling water passageways 22 of the fuel support fixtures 3, and it is fed into the fuel assemblies 45 from the outlet openings 24 and through orifices 25. When passing through the orifice 25, the coolinng water flows through gaps 28.

When the pressure and temperature of the interior of the reactor pressure vessel 31 have become predetermined values (about 70 kg/cm$^2$ and about 280°C), the control rods 41 are extracted from the core while the flow rate of the cooling water to be discharged from the recirculation pump is held at the flow rate of a 20% pump operation state. At this time, the reactor power rises along a characteristic indicated by a broken line in Fig. 1. When the reactor power has reached a point D, the extracting motion of the control rods 41 is stopped. In a case where the control rods 41 are extracted in a region in which the reactor power exceeds the point D, fuel rods in the fuel assemblies 45 might damage due to the mechanical interaction of claddings versus pellets. In a case where the reactor power is raised into a state higher than the point D, the control rods 41 which are control means for roughly adjusting the reactor power are held at a stop, and the flow rate of the cooling water to be fed into the core (the core flow rate) is increased instead of the motion of the control rods. The increase of the core flow rate can be achieved by augmenting the revolution number of the recirculation pump. The recirculation pump is control means for finely adjusting the reactor power. Owing to the increase of the reactor flow rate, the reactor power rises from the point D to the point C along the straight line BC shown in Fig. 1. When the reactor power has reached the point C, the increase of the core flow rate is stopped. With the consumption of fuel, the reactor power becomes lower than 100%. In order to compensate for the lowering and to hold the reactor power at 100%, the reactor flow rate is increased. The compensation of the reactor power based on the increase of the core flow rate is limited in relation to the capacity of the recirculation pump. In a case where the limit has been reached, the core flow rate is lowered to bring the reactor power below the point D, and the reactor power is raised to the point D by the extracting motion of the control rods 41. Thenceforth, the reactor power is raised to the point C along the straight line BC as stated before.

With the orifice 25, as in the orifice 5, when the Reynolds number of the gaps 28 increases, the orifice coefficient $K_{or}$ decreases as illustrated in Fig. 8. The critical Reynolds number $R_{ec}$ of the orifice 25 (the transition starting point of the orifice coefficient $K_{or}$) is $40 \times 10^4$. The gaps 28 of the orifice 25 are formed with laminar boundary layers as shown in Fig. 9, in a region of $R_e < 40 \times 10^4$, and with turbulent boundary layers as shown in Fig. 10, in a region of $R_e > 40 \times 10^4$. The diameter D of the round bars 27 of the orifice 25 is 0.735 cm, and the number of the round bars 27 is seven. The total projection area $A_{Ob}$ of the round bars 27 attached to a ring 26 is 89.3 cm$^2$, the total projection area $A_F$ od the gaps 28 formed between the round bars 27 is 13.2 cm$^2$, and the area of the inner side of the ring 26 is 102.5 ($= A_{Ob} + A_F$). The inside diameter of the ring 26 is 6.6 cm.

In the boiling water reactor 30, when the Reynolds number $R_e$ exceeds the critical Reynolds number $R_{ec}$ owing to the increase of the core flow rate, the pressure loss of the orifice 25 begins to decrease. The pressure loss at the point fo time at which the reactor power is 100% (the point C in Fig. 1) decreases by about 22% as compared with the pressure loss at the point of time corresponding to the point D. In the present embodiment, therefore, the cooling water flow rate which is discharged from the recirculation pump at the point C in Fig. 1 becomes less by the decrement of the pressure loss of the orifice 25 than the cooling water flow rate which is discharged from the recirculation pump at the point C in Fig. 1 in the prior-art boiling water reactor employing the fuel support fixtures 3 and the prior-art fuel assemblies (fuel assenblies 37 to be described later). The capacity of the recirculation pump in the present embodiment is equal to the capacity thereof in the prior-art boiling water reactor. With the present embodiment, accordingly, the increment of the core flow rate after the establishment of the state of the point C in Fig. 1 becomes larger than in the prior art. That is, in the present embodiment, the core flow rate can be made more than in the prior art as indicated by a broken line $L_1$ in Fig. 5C. With the present embodiment, therefore, the proportion at which the compensation of the reactor power lowering attributed to the fuel consumption can be performed by the increase of the core flow rate, that is, the control range of the reactor power by the core flow rate as utilizes the control means for finely adjusting the reactor power can be increased or expanded more than in the prior art. This leads to a remarkable decrease in the number of times by which the extraction motion of the control rods 41 is executed after bringing the reactor power below the point D, and utilization factor of the nuclear reactor in the present embodiment can be rendered much higher than that of the prior art.

If the recirculation pump trips during the operation with the reactor power of 100°C, the core flow rate decreases and the cooling water in the core falls into the natural circulation state. With the decrease of the core flow rate, the reactor power lowers along the straight line BC in Fig. 1 and down to the power of the point B. When the core flow rate becomes the flow rate of the natural circulation state in this manner, the flow state in the gaps 28 of the orifice 25 becomes as shown in Fig. 9, and the orifice coefficient $K_{or}$ of the orifice 25 increases. Accordingly, the present embodiment can prevent the phenomenon in which the core flow rate becomes unstable under the natural circulation state.

In this way, using the orifice 25 which has quite no movable part, the present embodiment can achieve the prevention of the instability for low flow rates and the enhancement of the utilization factor of the nuclear reactor.

Since, in the present embodiment, the plurality of round bars 27 are arranged in parallel, the burble condition of the boundary layer is determined by the velocity of flow of the cooling water flowing through the gap 28 and is not affected by any condition on the upper stream side with respect to the orifice 25, namely, within the lower plenum 36. Besides, since in the present embodiment the plurality of gaps 28 are formed by arranging the plurality of round bars 27 in the inlet openings 23 of the cooling water passageways 22 of the fuel support fixture 20, the flow direction of the cooling water which enters the gaps 28 from the lower plenum 36 is forcibly set right, and the appearance of vortices in the cooling water passageways 22 lessens. This is also one factor for the prevention of the instability of the flow. In particular, the cooling water in the lower plenum 36 gets to the fuel support fixtures 20 through the interstices among the large number of control rod guide pipes 39 erected within the lower plenum 36, so that the flow is drastically disturbed by the control rod guide pipes 39 in the course. Accordingly, the cooling water flows into the cooling water circulation holes 22 of the fuel support fixtures 20 in all directions. Since the orifice 25 is formed with the plurality of gaps 28 by the plurality of round bars 27, it has a very great function of reforming the drastically disturbed streams of the cooling water into the flow of the specified direction within the cooling water circulation holes 22.

In the embodiment thus far described, the orifice 25 is disposed in the lower tie plate 38 of the fuel assembly. Even when the orifice 25 is not mounted on the fuel assembly but is mounted on the fuel support fixture which is a fuel assembly supporting device, the same effects as those of the embodiment shown in Fig, 15 can be attained. Such an embodiment will be described below.

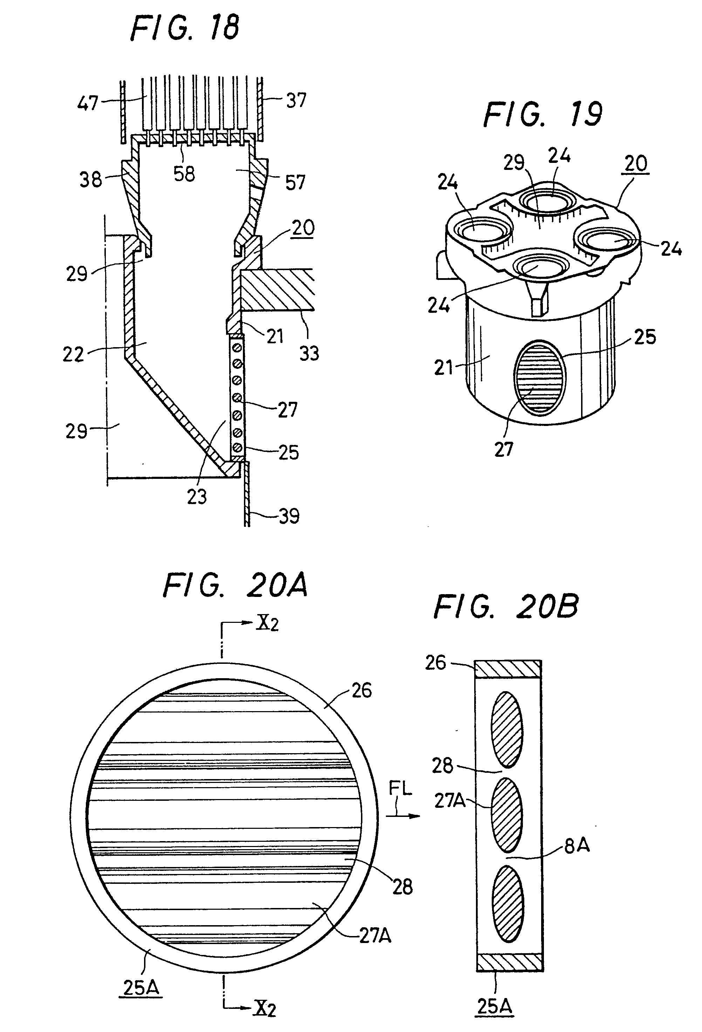

Fig. 18 shown the vicinity of the fuel support fixture of the boiling water reactor of the present embodiment, and illustrates a part corresponding to the portion I in Fig. 15. In the boiling water reactor of the present embodiment, the construction of parts not shown in Fig. 18 is the same as in Fig. 15. That is, the present embodiment differs from the embodiment of Fig. 15 in that the orifice 25 is mounted on the inlet opening 23 of the cooling water passageway 22 of the fuel support fixture 20, not on the fuel assembly.

As shown in Figs. 18 and 19, the fuel support fixture 20 has a fixture body 21 internally provided with four cooling water passageways 22 and the orifices 25 fitted in the inlet openings 23 of the cooling water passageways 22. Likewise to the support fixture 3, the fuel support fixture 20 is mounted on the core lower support plate 33. The orifice 25 lies below the core lower support plate 33, and is open to the lower plenum 36. The fuel assembly 37 is held by the fuel support fixture 3 in such a way that the lower end of the lower tie plate 38 is inserted into the outlet opening 24 of the cooling water passageway 22. The fuel assembly 37 is the fuel assembly 45 from which the orifice 25 has been removed.

During the operation of the boiling water reactor of the present embodiment, the cooling water in the lower plenum 36 flows from the inlet openings 23 into the cooling water passageways 22 of each fuel support fixture 20 through the orifices 25 and is supplied into the fuel assemblies 45. The orifice 25 functions similarly to that mounted on the fuel assembly 45 as in the preceding embodiment. That is, the orifice 25 forms laminar boundary layers and turbulent boundary layers as shown in Figs. 9 and 10 and changes the pressure loss in accordance with the variation of the core flow rate.

With the present embodiment, effects similar to those of the preceding embodiment are attained. The cooling water the streams of which are drastically disturbed by the control rod guide pipes 39 as stated before flows directly into each orifice 25 mounted on the fuel support fixture 20, in all directions. Since the orifice 25 is formed with the plurality of gaps 28 by the plurality of round bars 27, it has a very great function of reforming the cooling water streams entering it in all the directions, into the flow of a specified direction.

The orifice 25 is not restricted to the position shown in Fig. 12 or Fig. 18, but may be disposed at any position in the lower tie plate of the fuel assembly and the cooling water passageway 22 of the fuel support fixture. In other words, in the state in which the fuel assemblies are mounted on the fuel support fixtures in the boiling water reactor, the orifice 23 can be disposed in any desired place (of eitheir the fuel assembly or the fuel support fixture) within the channel of the cooling water extending from the inlet of the cooling water passageway 22 of the fuel support fixture to the lower surface of the fuel rod supporting portion 58 of the lower tie plate 38. In this regard, however, the attachment of the orifice 25 to the fuel assembly is easier of application to an existing reactor plant than the attachment thereof to the fuel support fixture. This is because the replacement of the fuel assemblies in the nuclear reactor is facilitated.

In the embodiment of the boiling water reactor in Fig. 18, various structures of the orifice 25 satisfying predetermined conditions of the boiling water reactor were studied. As examples of the specifications of the orifice 25 meeting the predetermined conditions of the boiling water reactor, ones listed in Table 1 have been obtained. They correspond to an instance in which the ring 29 of the orifice 25 has an inside diameter of 6.2 cm. The channel area of the fuel assembly is the cross-sectional area of a cooling water channel in the channel box 37 which overlies the lower tie plate 38 and in which the fuel rods 47 exist. In addition, the cooling water flow rate at which the pressure loss coefficient lowers is the cooling water flow rate of point $R_0$ in Fig. 8.

TABLE 1

| No. | Diameter (mm) of Round Bar 27 | Number of Bars | Pitch (mm) of Round Bars 27 | Channel Area $(cm^2)$ of fuel Assembly | Pressure Loss Coefficient | Cooling Water Flow Rate (kg/sec) at which Pressure Loss Coefficient Lowers |
|-----|------|----|-------|-----|----|------|
| 1 | 5.13 | 7  | 9.54  | 96  | 28 | 9.5  |
| 2 | 3.85 | 9  | 7.14  | 96  | 28 | 13.0 |
| 3 | 5.32 | 6  | 10.28 | 101 | 28 | 9.5  |
| 4 | 3.99 | 8  | 7.62  | 101 | 28 | 13.0 |
| 5 | 4.14 | 10 | 6.53  | 96  | 50 | 9.5  |
| 6 | 3.10 | 13 | 4.90  | 96  | 50 | 13.0 |
| 7 | 4.30 | 9  | 7.05  | 101 | 50 | 9.5  |
| 8 | 3.23 | 12 | 5.25  | 101 | 50 | 13.0 |

Other embodiment of the orifice 25 will be described below.

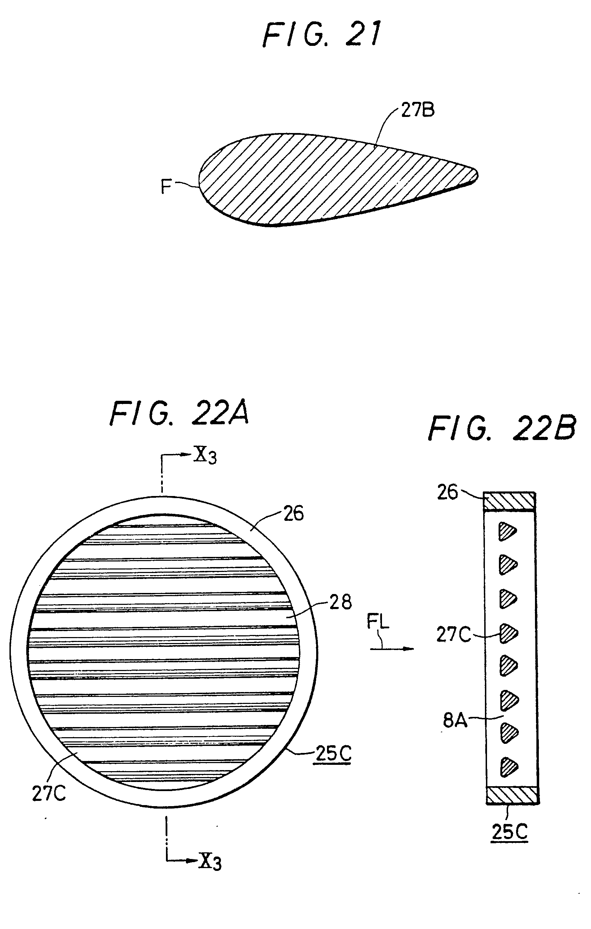

An orifice 25A shown in Figs. 20A and 20B is such that as resistors, bars of elliptic section 27A are employed instead of the round bars 27, and that they are arrayed in parallel in a number of three. The bar 27A has the major axis of the ellipse arranged perpendicularly to the direction of arrow FL (the direction of flow). This arrangement corresponds to Fig. 11A. In addition, the ratio of the major and minor axes of the ellipse is 2, and the diameter of the ellipse is 2.8 cm. This orifice 25A can demonstrate the same function as that of the orifice 25, and it is applicable to a case where the transition is to be caused at a high flow rate ($R_{ec} = 1.6 \times 10^6$). Moreover, since the number of the bars 27A is small, the fabrication of the orifice 25A is simple. It is also possible ti use the orifice with the bars 27A arranged so that the major axis of the ellipse may become parallel to the flow. As a feature in this case, the pressure loss of the orifice decreases gently in the vicinity of the critical Reynolds number. Further, an orifice in which resistors 27B as shown in Fig. 21 are attached to the ring 26 exhibits a pressure loss which decreases gently similarly. The resistor 27B is arranged with its part F facing the upper stream side of the flow.

An orifice 25C shown in Figs. 22A and 22B is so constructed that a bar 27C of a triangular section having smooth corner parts is employed as a resistor, and that the bars 27C are mounted on a ring 26. The orifice 25C is so priented that one of the vertices of the section of the bar 27C lies downstream as illustrated in Fig. 1.1F. Both the base length and the height of the section of the bar 27C are 15 cm. Each corner part of the section of the bar 27C is rounded with a curvature whose radius is approximately a quarter of the base length. The orifice 25C has the bars 27C arrayed in parallel in a number of eight. The critical Reynolds number of the orifice 25C becomes about $6 \times 10^5$. The present embodiment has the advantage that the transition condition can be varied by changing the curvature of the corner parts. The orifice 25C has the same function as that of the orifice 25.

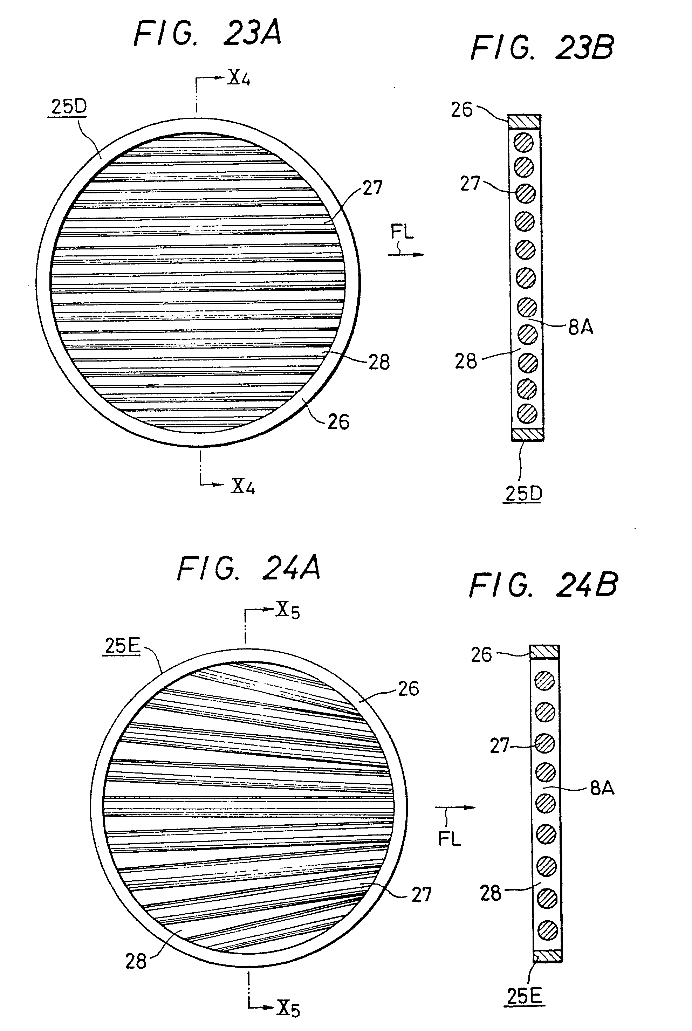

An orifice 25D shown in Figs. 23A and 23B has the same constituents as those of the orifice 25. In the orifice 25D, however, the gaps 28 between the round bars 27 are wider in central parts and narrower on both the sides and are not uniform, es shown in Fig. 23B. Owing to the non-uniform gaps 28 between the round bars 27, a distribution of the Reynolds number arises in a direction orthogonal to the flow direction of the orifice 25D, and the pressure loss lowers gently. A nuclear reactor employing the orifices 25D is capable of a stabler operation. Also the orifice 25D has the same function as that of the orifice 25.

An orifice 25E shown in Figs. 24A and 24B has the same constituents as those of the orifice 25. The orifice 25E has the gaps of the round bars 27 narrowed on one side and widened on the other side, thereby to establish a distribution of the velocity of flow.

Likewise to the orifice 25, each of the orifices 25A-25E can be mounted on any place in the fuel assembly and the fuel support fixture. In that case, the function of each orifice does not differ from that of the orifice 25 at all. The resistors disposed in each orifice may well be attached directly to the lower tie plate 38 of the fuel assembly 45 or the fixture body 21 of the fuel support fixture 20 in the cooling water passageway 22 without interposing the ring 26.

As regards the orifices 25A and 25C, the fabrication of the bars being the resistors is troublesome. As the resistors, the round bars are the easiest of fabrication and are readily available. Therefore, the orifices employing the round bars (or circular pipes) as the resistors can be fabricated most easily.

According to the present invention, the instability of a nuclear reactor under the state of a low coolant flow rate can be prevented using resistors which have no movable part.

Claims

1. A fuel assembly for a nuclear reactor having an upper tie plate, a lower tie plate, and a plurality of fuel rods each of which has both its ends retained by the upper tie plate and the lower tie plate; and a resistance device (25) disposed in said lower tie plate (38), said resistance device (25) having a plurality od coolant passages (28), characterized in that said coolant passages are formed with throat portions (8A), a cross-sectional area of said coolant passage (28) increasing continuously from said throat portion (8A) toward an upper stream side and a lower stream side, respectively, each of opposing side walls of said each coolant passage (28) being constructed of a continuous surface having no angled part from the upper stream side of said throat portion (8A) to the lower stream side thereof.

2. A fuel assembly for a nuclear reactor according to claim 1, wherein said resistance device (25) includes a plurality of resistance members (27), said coolant passage (28) is formed between the adjacent resistance members (27), end each of the opposing side walls of said coolant passage (28) is a surface of said resistance member (27).

3. A fuel assembly for a nuclear reactor according to claim 2, wherein said resistance member (27) disposed in said resistance device (25) is a round bar.

4. A nuclear reactor having a reactor vessel, a core support member which is disposed in the reactor vessel, a plurality of fuel assembly supporters which are mounted on the core support member and which have first coolant passageways therein, and a plurality of reactor fuel assemblies which are supported by said fuel assembly supporters and each of which includes a lower tie plate having a second coolant passageway therein, an upper tie plate and a plurality of fuel rods each having both its ends retained by the lower tie plate and the upper tie plate, a resistance device (25) disposed in either of said first coolant passageway (22) and said second coolant passageway (57), said resistance device (25) having a plurality of coolant passages (28), characterized in that said coolant passages are formed with throat portions (8A), a cross-sectional area of said coolant passage (28) increasing continuously from said throat portion (8A) toward an upper side and a lower stream side, respectively, each of opposing side walls of said each coolant passage (28) being constructed of a continuous surface having no angled part from the upper stream side of said throat portion (8A) to the lower stream side thereof.

5. A nuclear reactor according to claim 4, wherein said resistance device (25) includes a plurality of resistance members (27), said each coolant passage (28) is formed between the adjacent resistance members (27), and each of the opposing side walls of said each coolant passage (28) is a surface of said resistance member (27).

6. A nuclear reactor according to claim 5, wherein said resistance member (27) disposed in said resistance device (25) is a round bar.

Patentansprüche

1. Brennelementkassette für Kernreaktoren mit einer oberen und einer unteren Ankerplatte und mehreren Brennstäben, deren beide Enden durch die obere bzw. untere Ankerplatte gehalten werden und mit einem Strömungswiderstand (25), mit mehreren Kühlmittelpassagen (28), dadurch gekennzeichnet, daß die Kühlmittelpassagen mit verengten Bereichen (8A) versehen sind, wobei der Querschnitt der Kühlmittelpassage (28) stetig von dem verengten Bereich (8A) auf die obere Strömungsseite und die untere Strömungsseite hin sich erweitert, wobei jede der sich gegenüberliegenden Seitenwände jeder Kühlmittelpassage (28) eine stetige Oberfläche aufweist, die keinen gewinkelten Bereich von der oberen Strömungsseite des Verengungsbereiches (8A) bis zur unteren Strömungsseite aufweist.

2. Brennelementkassette nach Anspruch 1, bei dem der Strömungswiderstand (25) mehrere Widerstandsorgane (27) aufweist und die Kühlmittelpassage (28) zwischen benachbarten Widerstandsorganen (27) ausgeformt ist und jede der sich gegenüberliegenden Seitenwände der Kühlmittelpassage (28) eine Oberfläche des Widerstandsorgans (27) ist

3. Brennelementkassette nach Anspruch 2, wobei das Widerstandsorgan (27), das in dem Strömungswiderstand (25) angeordnet ist, eine runde Stange ist.

4. Kernreaktor mit einem Reaktorkessel, einer Trägeranordnung für den Reaktorkern, die in dem Reaktorkessel angeordnet ist, mehreren Brennelementkassettenträgern, die auf der Trägeranordnung für den Reaktorkern angeordnet sind und die erste Kühlmittelpassagen aufweisen und mit mehreren Brennelementkassetten, die von den Kassettenhaltern getragen werden und jeweils eine untere Ankerplatte aufweisen, die zweite Kühlmittelpassagen aufweist, mit einer oberen Ankerplatte und mehreren Brennstäben, deren beide Enden durch die untere bzw. obere Ankerplatte gehalten werden und mit einem Strömungswiderstand (25), der jeweils in der ersten Kühlmittelpassage (22) und der zweiten Kühlmittelpassage (57) angeordnet ist, wobei der Strömungswiderstand (25) mehrere Kühlmittelpassagen (28) aufweist, dadurch gekennzeichnet, daß die Kühlmittelpassagen mit verengten Bereichen (8A) versehen sind, und der Querschnitt der Kühlmittelpassage (28) kontinuierlich von dem verengten Bereich (8A) in Richtung auf die obere Strömungsseite und die untere Strömungsseite sich vergrößert, wobei jeder der sich gegenüberstehenden Seitenwände jeder Kühlmittelpassage (28) aus einer stetigen Oberfläche besteht, ohne winklige Bereiche von der oberen Stömungsseite des Verengungsbereichs (8A) bis zur unteren Strömungsseite des Verjüngungsbereichs.

5. Kernreaktor nach Anspruch 4, wobei der Strömungswiderstand mehrere Widerstandsorgane (27) aufweist und jede Kühlmittelpassage (28) zwischen benachbarten Widerstandsorganen (27) ausgebildet ist und jede der sich gegenüberliegenden Seitenwände jeder Kühlmittelpassage (28) eine Oberfläche des Widerstandsorgans (27) ist.

6. Kernreaktor nach Anspruch 5, wobei das Widerstandsorgan (27), das in dem Strömungswiderstand (25) angeordnet ist, eine runde Stange ist.

**Revendications**

1. Assemblage combustible pour un réacteur nucléaire comportant une plaque support supérieure, une plaque support inférieure et une pluralité de barres de combustible, dont chacune a ses deux extrémités retenues par la plaque support supérieure et la plaque support inférieure; un dispositif (25) produisant une résistance et disposé dans ladite plaque support inférieure (38), ledit dispositif (25) produisant une résistance possédant une pluralité de passage (28) pour le réfrigérant, caractérisé en ce que lesdits passages pour le réfrigérant comportant des parties formant étranglements (8A), une surface en coupe transversale dudit passage (28) pour le réfrigérant augmentant continûment depuis ladite partie formant étranglement (8A) respectivement en direction d'un côté supérieur d'écoulement et d'un côté inférieur d'écoulement, chacune des parois latérales opposées de chacun desdits passages (28) pour le réfrigérant étant formée par une surface continue ne comportant aucune partie coudée depuis le côté supérieur d'écoulement par rapport à ladite partie formant étranglement (8A) en direction du côté inférieur d'écoulement par rapport à cette partie.

2. Assemblage combustible pour un réacteur nucléaire selon la revendication 1, dans lequel le dispositif (25) produisant une résistance comporte une pluralité d'éléments (27) produisant une résistance, ledit passage (28) pour le réfrigérant est formé entre les éléments (27) voisins produisant une résistance, et chacune des parois latérales opposées dudit passage (28) pour le réfrigérant est une surface dudit élément (27) produisant une résistance.

3. Assemblage combustible pour un réacteur nucléaire selon la revendication 2, dans lequel ledit élément (27) produisant une résistance, disposé dans ledit dispositif (25) produisant une résistance, est une barre cylindrique.

4. Réacteur nucléaire comportant un caisson, un élément de support du coeur, qui est disposé dans le caisson du réacteur, une pluralité de supports d'assemblages combustibles, qui sont montés sur l'élément de support du coeur et possèdent en eux des premiers passages pour le réfrigérant, et une pluralité d'assemblages combustibles du réacteur, qui sont supportés par lesdits supports des assemblages combustibles et dont chacun comporte une plaque support inférieure contenant en elle un second passage pour le réfrigérant, une plaque support supérieure et une pluralité de barres de combustible dont chacune a ses extrémités retenues par la plaque support inférieure et la plaque support supérieure, un dispositif (25) produisant une résistance, disposé dans ledit premier passage (22) pour le réfrigérant ou dans ledit second passage (57) pour le réfrigérant, ledit dispositif (25) produisant une résistance comportant une pluralité de passages (28) pour le réfrigérant, caractérisé en ce que lesdits passages pour le réfrigérant comportent des parties formant étranglements (8A), une surface en coupe transversale dudit passage (28) pour le réfrigérant augmentant continûment depuis ladite partie formant étranglement (8A) respectivement en direction d'un côté supérieur d'écoulement et d'un côté inférieur d'écoulement, chacune des parois latérales opposées de chacun desdits passages (28) pour le réfrigérant étant formée par une surface continue en comportant aucune partie coudée s'étendant à partir du côté supérieur d'écoulement par rapport à ladite partie formant étranglement (8A) en direction du côté inférieur d'écoulement par rapport à cette partie.

5. Réacteur nucléaire selon la revendication 4, dans lequel ledit dispositif (25) produisant une résistance inclut une pluralité d'éléments (27) produisant une résistance, chacun desdits passages (28) pour le réfrigérant est formé entre les éléments (27) voisins produisant une résistance, et chacune des parois latérales opposées de chacun desdits passages (28) pour le réfrigérant est une surface dudit élément (27) produisant une résistance.

6. Réacteur nucléaire selon la revendication 5, dans lequel ledit élément (27) produisant une résistance, disposé dans ledit dispositif (25) produisant une résistance, est une barre cylindrique.

## FIG. 1

## FIG. 2

11

## FIG. 3

EP 0 205 162 B1

FIG. 4A

FIG. 4B

FIG. 6A

FIG. 6B

15

# FIG. 5A

# FIG. 5B

# FIG. 5C

# FIG. 7

# FIG. 8

# FIG. 9

# FIG. 10

# FIG. 11A    FIG. 11B    FIG. 11C

# FIG. 11D    FIG. 11E    FIG. 11F

FIG. 12

FIG. 13

# FIG. 15

## FIG. 14A

## FIG. 14B

## FIG. 17

## FIG. 16

## FIG. 18

## FIG. 19

## FIG. 20A

## FIG. 20B

## FIG. 21

27B

F

## FIG. 22A

X₃

26

28

FL

27C

25C

X₃

## FIG. 22B

26

27C

8A

25C

## FIG. 23A

25D

→ X4

27

FL →

28

26

→ X4

## FIG. 23B

26

27

8A

28

25D

## FIG. 24A

→ X5

25E

26

26

27

8A

27

FL →

28

28

→ X5

## FIG. 24B

26

27

8A

28

25E